# EUROPÄISCHE PATENTSCHRIFT

(11) **EP 3 463 855 B1**
(45) Veröffentlichungstag und Bekanntmachung des Hinweises auf die Patenterteilung: **12.10.2022**
(21) Anmeldenummer: 17707542.1
(22) Anmeldetag: 27.02.2017
(51) Int. Cl.: B32B 5/18, B32B 21/04, B32B 21/08, B32B 25/14, B32B 27/06, B32B 27/08, B32B 27/20, B32B 27/30, B32B 27/32, B32B 27/40, B32B 1/00

(54) **MEHRSCHICHTIGES TIEFGEZOGENES FLÄCHENGEBILDE**
DEEP-DRAWN MULTILAYER SHEET MATERIAL
STRUCTURE PLANE MULTICOUCHE EMBOUTIE

(30) Priorität: 24.05.2016 DE 102016208963
(43) Veröffentlichungstag der Anmeldung: 10.04.2019
(73) Patentinhaber: Benecke-Kaliko AG, 30419 Hannover (DE)
(72) Erfinder: MIELKE, Dirk Harald, 30966 Hemmingen (DE); PRÖMPERS, Günter Leo, 30827 Garbsen (DE)
(74) Vertreter: Continental Corporation
(86) Internationale Anmeldenummer: PCT/EP2017/054456
(87) Internationale Veröffentlichungsnummer: WO 2017/202510

(56) Entgegenhaltungen:
- EP-A1- 1 908 576
- WO-A1-2012/099715
- CN-A- 105 401 453
- DE-A1- 1 704 433
- DE-A1-102014 101 395

## Beschreibung

Die Erfindung betrifft ein mehrschichtiges tiefgezogenes Flächengebilde, welches zumindest eine Trägerschicht und eine geschäumte Schicht auf der Basis von Polyvinylchlorid enthält. Das mehrschichtige tiefgezogene Flächengebilde wird als Innenverkleidungsteil für ein Fahrzeug verwendet.

Flächengebilde mit einer geschäumten Deckschicht auf der Basis von Polyvinylchlorid (PVC) sind für die Innenverkleidung von Kraftfahrzeugen als Oberflächen für Instrumententafeln, Türseitenverkleidungen, Säulenverkleidungen etc. bereits bekannt. Die Flächengebilde besitzen üblicherweise einen mehrschichtigen Aufbau, sind oft hinterschäumt oder auf Bauteile kaschiert und weisen auf ihrer Oberseite eine dreidimensional strukturierte, geprägte Oberfläche auf, eine so genannte Musterung oder Narbung in verschiedensten Formen und Ausführungen. Der mehrschichtige Aufbau besteht oft aus einer oberen ggf. lackierten Deck- oder Dekorschicht, die geprägt ist, ggf. einer geschäumten Schicht und ggf. einem rückseitigem Primer. Der Primer dient zur besseren Verklebung oder Schaumhaftung zum Träger.

Insbesondere zur Verwendung der Flächengebilde als Innenverkleidung von Kraftfahrzeugen werden die genarbten Flächengebilde tiefgezogen, d.h. verformt. Bei den tiefgezogenen Bauteilen der Innenverkleidung handelt es sich somit nicht um Kunstleder, welches immer einen textilen Träger enthalten muss und meist nur für die besessene Fläche im Automobilinnenraum verwendet wird. Kunstleder muss eine gewisse Flexibilität und Dehnbarkeit aufweisen und lässt sich behandeln wie Leder, so lässt es sich zum Beispiel wie Leder vernähen. Kunstleder, wie sie bspw. in EP 2 918 629 A1, DE 10 2014 110 813 A1, DE 10 2014 110 814 A1 und DE 10 2014 110 815 A1 sind in der Regel nicht verformbar, somit können sie nicht tiefgezogen werden ohne die Struktur und die Eigenschaften des Kunstleders zu zerstören. Der textile Träger hält die hohen Verstreckungen beim Tiefziehen nicht aus. EP 1 908 576 A1 offenbart ein mehrschichtiges tiefgezogenes Flächengebilde, welches zumindest eine Trägerschicht und eine geschäumte, Mikrohohlkugeln enthaltende, Schicht auf der Basis von Polyvinylchlorid umfasst. WO 2012/099715 A1 offenbart einen Container für Isolieranwendungen im Haushalt, welcher ein tiefgezogenes Flächengebilde mit einer geschäumten Schicht enthält.

Bei den mehrschichtigen tiefgezogenen Flächengebilden mit einer Schicht auf der Basis von PVC wird die PVC-Schicht meist geschäumt. Dies erfolgt mit Azodicarbonamid (ADCA). Während des Aufschäumprozesses und der damit verbundenen Zersetzungsreaktion des ADCA entstehen Zersetzungsverbindungen, die zu einem unangenehmen Geruch des Produktes führt. Des Weiteren ist der Einsatz von Azodicarbonamid als "atemwegssensiblisierend" eingestuft und wurde als "Equivalent Level of Concern" (ELoC) seitens der Europäischen Chemieagentur (ECHA) in die Autorisierungsliste (Anhang XIV) zur Aufnahme in die REACH-Verordnung aufgenommen.

Der vorliegenden Erfindung liegt daher die Aufgabe zu Grunde, ein mehrschichtiges tiefgezogenes Flächengebilde, welches kein Kunstleder ist, mit wenigstens einer geschäumten Schicht, im folgenden auch als Schaumschicht bezeichnet, auf der Basis von PVC bereit zu stellen, welches nicht gesundheitsgefährdend ist und welches keine unangenehmen Gerüche freisetzt.

Gelöst wird die Aufgabe erfindungsgemäß durch ein tiefgezogenes Flächengebilde gemäss Anspruch 1.

Wie bereits erwähnt handelt es sich bei dem mehrschichtigen tiefgezogenen Flächengebilde nicht um ein Kunstleder. Gemäß DIN 16 922 (1981) Absatz 2.1.1 muss ein Kunstleder, welches auch als Kunststoff-Textilbahn bezeichnet wird, mindestens eine Schicht aus textilen, flexiblen Flächengebilden enthalten. Das erfindungsgemäße mehrschichtige tiefgezogene Flächengebilde ist allerdings kein Kunstleder und somit frei von Textilschichten bzw. textilen, flexiblen Flächengebilden.

Überraschenderweise hat sich gezeigt, dass sich durch die Kombination von PVC und Mikrohohlkugeln sich eine PVC-Schicht mit Schaumstruktur herstellen lässt, die nicht gesundheitsgefährdend ist und die vor allem keine unangenehmen Gerüche freisetzt. Die Darstellung des Flächengebildes kann in allen gängigen Farben und Narben erfolgen.

Der Einsatz der Mikrohohlkugeln in der PVC-Schaumschicht sorgt für das benötigte Aufschäumen des Produktes, um die erforderliche Haptik und die entsprechende Gewichtseinsparung zu erreichen. Während des Aufschäumprozesses expandieren die Mikrohohlkugeln um etwa das 3,5fache. Dabei entstehen keine Zersetzungsverbindungen, die zu einem unangenehmen Geruch des Produktes führen können. Dies führt zu einer Verbesserung des Geruchs im automobilen Innenraum.

Des Weiteren führt der Einsatz der Mikrohohlkugeln, die je nach Art zwischen 110 und 180°C expandieren, in der PVC-Matrix für ein homogeneres Aufschäumverhalten im Vergleich zu mit Azodicarbonamid geschäumten PVC-Schaumschichten, die aufgrund der höheren Aktivierungsenergie zu einem Badewannenprofil über die Breite führen.

Durch den Einsatz der Mikrohohlkugeln wird aufgrund der Größe die Migration von weiteren chemischen Schaummitteln bzw. Treibmitteln, die noch vorhanden sein können, in den kompakten Deckstrich vermieden. Dies unterbindet das Aufschäumen des Deckstrichs an der Grenzschicht und es ist eine klar definierte Grenzschicht zwischen Deck- und Zwischenstrich vorhanden. Das hat zur Folge, dass somit eine bessere Prägbarkeit bei höherer Geschwindigkeit erreicht wird und selbst bei geringen Deckstrichdicken keine Mikroblasen zu Fehlstellen auf der Oberfläche führen. Eine besonders klar definierte Grenzschicht lässt sich dadurch erreichen, wenn die PVC-Schaumschicht frei von weiteren chemischen Treibmitteln, insbesondere frei von ADCA, ist. Die Menge an weiteren chemischen Treibmitteln beträgt somit 0 Gew.-% bezogen auf die jeweilige Rezeptur.

Als PVC kann bevorzugt in einer Menge von 35 bis 65 Gew. -% bezogen auf die Rezeptur der PVC-Schaumschicht eingesetzt werden.

Das Polyvinylchlorid kann hierbei bevorzugt als S-PVC, welches technisch durch Suspensionspolymerisation hergestellt wird, oder als E-PVC, welches technisch durch Emulsionspolymerisation hergestellt wird, oder als M-PVC, welches mittels Substanzpolymerisation bzw. Massepolymerisation hergestellt wird, oder als MS-PVC, welches im Mikrosuspensionsverfahren hergestellt wird, vorliegen.

Erfindungsgemäß enthält die PVC-Schaumschicht Mikrohohlkugeln. Diese werden in Mengen von 0,6 bis 2,5 Gew.-% bezogen auf die Rezeptur der PVC-Schaumschicht eingesetzt.

Die Mikrohohlkugeln können in expandierter oder in nicht-expandierter Form eingesetzt werden. Mikrohohlkugeln aus thermoplastischem Kunststoffinaterial weisen eine gewisse Elastizität auf und halten den Scherkräften im Mischverfahren besser stand als Mikrohohlkugeln aus Glas, Phenolharz oder Kohlenstoff.

Bei dem thermoplastischen Kunststoffmaterial handelt es sich um wenigstens ein Acrylnitrilpolymer. Derartige Mikrohohlkugeln sind unter anderem unter dem Handelsnamen Expancel^{®} von der Firma Akzo Nobel oder unter dem Handelsnamen Advancell^{®} von der Firma Sekisui erhältlich.

Die in dem tiefgezogenen Flächengebilde vorliegende PVC-Schaumschicht enthält zusätzlich die üblichen Additive wie z. B. Weichmacher, Stabilisatoren, Alterungsschutzmittel (z. B. Antioxidantien), Füllstoffe, Flammschutzmittel (z. B. Antimontrioxid oder Zinkhydroxystannat), Pigmente (z. B. Ruß, Titandioxid) und weitere Hilfssubstanzen (z. B. Viskositätshilfsmittel, Haftvermittler etc.).

Das erfindungsgemäße tiefgezogene Flächengebilde kann weitere Schichten, wie z. Bsp. nicht-geschäumte Schichten als Dekorschicht bzw. Deckstrich enthalten. Diese weiteren Schichten sind bevorzugt auf der Basis von Polymeren wie bspw. Polyurethan, PVC oder thermoplastischer Polyolefine. ebenfalls außer PVC andere Polymere wie zum Beispiel Polyurethan, thermoplastische Polyolefine vorhanden sein.

Weiterhin kann mehrschichtige tiefgezogene Flächengebilde eine Lackschicht aufweisen, die nach außen weisend auf die Deckschicht aufgebracht ist. Als Lacke können solche verwendet werden, die bspw. auf Basis von Polyurethan (PU bzw. PUR), PVC/Acrylat, Acrylat sind.

Das erfindungsgemäße mehrschichtige tiefgezogene Flächengebilde hat bevorzugt einen Auszugsgrad zwischen 1 und 200%, besonders bevorzugt zwischen 10 und 150%. Der Auszugsgrad ist die Veränderung vom Ausgangszustand des Flächengebildes nach dessen Umformung.

Das mehrschichtige tiefgezogene Flächengebilde enthält wenigstens eine Trägerschicht. Als Trägerschicht können z.B. Holzfaserverbundstoffe oder Schichten auf Basis wenigstens eines Thermoplasten oder thermoplastischen Elastomers verwendet werden. Als Thermoplasten bzw. thermoplastische Elastomere kommen bspw. PP, PVC-ABS, PC, PUR in Frage.

Das mehrschichtige tiefgezogene Flächengebilde kann durch Prozesse wie z.B. Thermoformen, In-Mould Graining, Low pressure moulding oder Presskaschieren in eine gewünschte dreidimensionale Oberfläche umgeformt werden. Diese dreidimensional geformten Körper finden u.a. Verwendung in Flugzeugen, Bahnfahrzeugen, Schiffen und in Kraftfahrzeugen,

Besonders vorteilhaft lässt sich das erfindungsgemäße tiefgezogene Flächengebilde als Innenverkleidungsteil für ein Kraftfahrzeug verwenden, welches nicht besessen wird, insbesondere für Armaturentafeln, Türverkleidungen, Mittelkonsolen, Hutablagen, Sitzrückwände, Säulenverkleidungen, z. Bsp. für ABC-Säulen, und Armauflagen.

### Beispielrezeptur für eine erfindungsgemäße PVC -Schaumschicht:

| | |
|---|---|
| 100 phr | PVC (M-PVC, E-PVC, S-PVC, MS-PVC) |
| 80 phr | Weichmacher (DIDP) |
| 2 phr | Stabilisator (CaZn) |
| 2,5 phr | Mikrohollkugeln |
| 1 bis 5 phr | Pigmente |

| | |
|---|---|
| (phr = parts per hundred parts of rubber) | |

Diese Beispielrezeptur wurde in einem erfindungsgemäßen Flächengebilde verwendet. Zusätzlich enthält das Flächengebilde noch eine nicht-geschäumte Dekorschicht auf der Basis von PVC. Das Flächengebilde wurde anschließend auf einen Träger aufgebracht und genarbt.Mit diesem genarbten Flächengebilde wurde eine dreidimensionale Dachform mit Auszugsgraden von 50 bis 60% an einer Kiefel-Tiefziehanlage bei 165°C dargestellt. Die Dachform simuliert eine Türverkleidung im PKW-Innenraum.

## Patentansprüche

1. Mehrschichtiges tiefgezogenes Flächengebilde, welches zumindest eine Trägerschicht und eine geschäumte Schicht auf der Basis von Polyvinylchlorid enthält, **dadurch gekennzeichnet, dass** das mehrschichtige tiefgezogene Flächengilde kein Kunstleder und somit frei von Textilschichten bzw. textilen, flexiblen Flächengebilden ist und dass das mehrschichtige tiefgezogene Flächengilde ein Innenverkleidungsteil für ein Fahrzeug ist und dass die geschäumte Schicht 0,6 bis 2,5 Gew.-% Mikrohohlkugeln aus Acrylnitrilpolymer enthält und dass die geschäumte Schicht frei von zusätzlichen chemischen Treibmitteln ist.

## Claims

1. Deep-drawn multilayer sheet material which at least comprises one backing layer and one foamed layer based on polyvinyl chloride, **characterized in that** the deep-drawn multilayer sheet material is not imitation leather and hence is free of textile layers or of flexible textile sheet materials, and **in that** the deep-drawn multilayer sheet material is an interior cladding part for a vehicle, and **in that** the foamed layer comprises from 0.6% to 2.5% by weight of hollow microspheres made of acrylonitrile polymer, and **in that** the foamed layer is free from additional chemical blowing agents.

## Revendications

1. Structure de surface tirée en profondeur multicouche, qui contient au moins une couche de support et une couche moussée à base de poly(chlorure de vinyle), **caractérisée en ce que** la structure de surface tirée en profondeur multicouche n'est pas un cuir artificiel et est ainsi exempte de couches de textile ou de structures de surface textiles, flexibles et **en ce que** la structure de surface tirée en profondeur multicouche est un élément d'habillage intérieur pour un véhicule et **en ce que** la couche moussée contient 0,6 à 2,5 % en poids de microbilles creuses composées d'un polymère acrylonitrile et **en ce que** la couche moussée est exempte d'agents gonflants chimiques supplémentaires.
